# EUROPEAN PATENT APPLICATION

(11) **EP 3 321 174 A1**
(43) Date of publication of application: **16.05.2018**
(21) Application number: 16197967.9
(22) Date of filing: 09.11.2016
(51) Int. Cl.: B64C 1/14

(54) **AIRCRAFT DOOR SYSTEM AND METHOD FOR OPENING AND CLOSING AN AIRCRAFT DOOR**

(71) Applicant: Airbus Operations GmbH, 21129 Hamburg (DE)
(72) Inventor: Hegenbart, Matthias, 21129 Hamburg (DE); Linde, Peter, 21129 Hamburg (DE)
(74) Representative: Isarpatent

(57) **Abstract**

An aircraft door system (1) is disclosed which includes a frame structure (10) defining an aperture (11), an aircraft door (20) including an area member (21) formed as a multi-layered composite structure including multiple actuator layers (21A; 21B) each of which comprising an electroactive polymer material that is excitable to an excited state by an electrical voltage, and an electrical connection interface (22), and a pivoting device (30) being coupled to the frame structure (10) and the aircraft door (20). Further, a method for opening and closing an aircraft door (20) and an use of an area member (21) including an electroactive polymer as an aircraft door (20) disclosed.

## Description

### FIELD OF THE INVENTION

The present invention pertains to an aircraft door system and a method for opening and closing an aircraft door.

### BACKGROUND OF THE INVENTION

Fuselages of aircrafts usually are provided with multiple access apertures for loading freight to the interior of the fuselage or for allowing passengers or crew to enter the interior of the fuselage. Further, aircraft doors are provided for covering and uncovering the access apertures during specific operational periods of the aircraft. Aircraft doors conventionally are coupled to a door frame surrounding the access aperture by means of hinges such that the door is pivotable about the hinge between a closing position in which the door covers the access opening and an opening position in which the door clears the access opening.

In order to reliably arrest the door in its closing position mechanical locking mechanisms are conventionally provided. For example, US 5,305,969 A discloses an aircraft door comprising a plurality of stop pins extending sideward from the door, wherein said stop pins abut against respective stop pads provided at a fuselage structure surrounding the access opening. During flight of the aircraft, a pressure within the interior of the fuselage is higher than a pressure outside the fuselage. This pressure difference urges the stop pins against the stop pads. For clearing the pins and the pads in order to allow opening of the door, a mechanical drive mechanism is provided for lifting the door relative to the fuselage structure. DE 40 22 067 A1 discloses a locking mechanism for an aircraft door including hooks which are arranged at the door and are pivotable so as to cooperate with respective counter parts being attached to a fuselage structure of the aircraft. The hooks are actuated by means of electrical drive motors in order to engage or clear the counterparts attached to the fuselage structure.

### SUMMARY OF THE INVENTION

It is one of the objects of the invention to provide an improved locking concept for aircraft doors.

This object is achieved by the subject-matter of the independent claims. Advantageous embodiments and developments become apparent from the dependent claims and the description.

According to a first aspect of the invention, an aircraft door system comprises a frame structure, an aircraft door, and a pivoting device. The frame structure defines an aperture provided for surrounding an access opening of a fuselage of an aircraft. The aircraft door comprises an area member being formed as a multi-layered composite structure including multiple actuator layers each of which comprising an electroactive polymer material being excitable to an excited state by an electrical voltage, and an electrical connection interface which is configured for electrically connecting the actuator layers to an electrical power source. The pivoting device is coupled to the frame structure and the aircraft door for guiding the aircraft door between a closing position and an opening position. In the closing position, the area member of the aircraft door covers the aperture and a marginal region of the area member overlaps with the frame structure. In the opening position, the aircraft door clears or uncovers the aperture. In the excited state of the electroactive polymer material, the actuator layers are deformed such that the area member is contracted to an areal expanse in which the overlap between the frame structure and the marginal region of the area member is cleared.

The aircraft door of the aircraft door system is formed by an area member having an areal expanse, that is a plate shaped or bowl shaped structure. In the closing position, the area member of the aircraft door covers or closes the aperture defined by the frame structure. In particular, a marginal region of the area member overlaps with the frame structure. That is, in the closed position, the area member can not be moved through the aperture along a specific course of movement defined by the pivoting device. The marginal region in particular extends along a circumferential edge of the area member. For example, the marginal region may be defined by a stripe shaped area extending inwardly from the edge of the area member with a constant width measured from the edge of the area member.

The area member is configured as a multi-layered composite structure which includes a plurality of physical layers or stripes stacked or aligned above each other, wherein the layers in particular may be embedded in a matrix material, for example a thermoplastic or duroplastic resin. Some of the plurality of layers of the area member comprise an electroactive polymer material which is transferable to an excited state by applying an electrical voltage to the electroactive polymer material. In the following, the "electroactive polymer material" is abbreviated as EAP material. In the excited state, the EAP material is deformed with respect to its unexcited or ground state, that is when no electrical voltage is applied to the EAP material. Hence, by applying an electrical voltage to the layers comprising the EAP material, deformation and in particular contraction or shrinking of the area member is achievable. The layers which include the EAP material thus form actuator layers which cause contraction of the area member in the excited state of the EAP material. By contracting the area member, the areal expanse of the area member is shrinkable to such an extent that the overlap between the areal member and the frame structure can be cleared as a consequence of the deformation of the EAP material. This allows moving of the area member through the aperture.

Due to overlap between the marginal region of the area member and the frame structure in the closing position mechanical load applied to the area member, for example due to the pressure difference between the interior of the fuselage and the ambience exterior of the fuselage during flight, is distributed over the entire marginal region. Thus, the specific load per area is efficiently reduced. By providing the area member of the aircraft door with actuator layers comprising an EAP material, the overlap between area member and frame structure can be cleared without need of mechanical systems but by applying electrical voltage to the EAP material. Thus, the weight of the aircraft door system is remarkably reduced.

According to an embodiment of the aircraft door system, the interface may be formed as a socket or pin including contact devices being electrically connected to the actuator layers. Such an interface provides for easy installation of the aircraft door system, in particular for easy connection to an external electrical power source.

According to a further embodiment, the actuator layers include one or more first actuator layers and one or more second actuator layers, wherein in the excited state the first and second actuator layers each are contracted with respect to a contracting direction relative to an unexcited state of the first and second actuator layers. In particular, each of the actuator layers comprises a specific direction of deformation or contraction. That is along this contracting direction, a maximum change in length of the respective actuator layer takes place when the EAP material is transferred to the excited state. According to this embodiment, the one or more first actuator layers and the one or more second actuator layers are arranged within the multi-layered composite structure such that the contracting direction of the one or more first actuator layers extends transversal to the contracting direction of the one or more second actuator layers. Thereby, it is achieved that the contracting directions of the layers extend crossways to each other. For example, the first and second actuator layers may be provided alternately within the multi-layered structure. Generally, the actuator layers may in particular be arranged so as form multiple directions of contraction of the area member. In this manner, a substantially uniform contraction of the hole circumference is advantageously achieved.

According to a further embodiment, the actuator layers each comprise a plurality of strings each of which being formed by a plurality of electroactive polymer sticks which are coupled to one another, wherein the strings extend along each other, and wherein the sticks in the exited state of the electroactive polymer material are bent to a curved shape. The strings in particular are formed as longitudinally extending chains of sticks being produced from an EAP material. The sticks forming a respective string or chain are coupled to each other, for example by means of a small stripe of flexible material which may also be an EAP material. In particular, bent directions of sticks which are arranged adjacent to one another with respect to the longitudinal extension of the chain may be oriented along each other. The bending to a curved shape of the sticks in the exited state of the EAP material causes a decrease of the length of the string and thus contraction of the actuator layer. The chain or string like structure comprising a plurality of sticks increases achievable actuation forces.

According to a further embodiment, the sticks of the strings are coupled to one another within the respective string such that four sticks together form a rhombus shaped string member, respectively. In particular, for sticks are arranged such that they limit a pitch. The string members are coupled to each other to form the longitudinal extension of the string. In particular, the sticks are arranged such that they bend towards a center of the pitch in the excited state. That is, a middle region of each of the sticks is moved towards the center of the pitch or, consequently, opposite ends of each stick are moved away from the center. The rhombus shaped string members increase the number of sticks per length which further increases actuation forces.

According to a further embodiment, each of the actuator layers comprises a carrier film to which the plurality of strings is attached. In particular, the carrier film comprises an areal expanse. The strings may be attached to a surface of the carrier film or may be embedded within the cross-section of the carrier film. The carrier film provides the benefit that actuator layers can be manufactured in an efficient manner, for example by deposing the strings to the carrier film by an additive layer manufacturing method. Further, the carrier film eases handling of the actuator layer, for example during manufacturing of the area member.

According to a further embodiment, the aircraft door comprises at least two reinforcing members extending along the marginal region of the area member and being arranged spaced to each other along the extension of the marginal region. The reinforcing members provide additional mechanical strength to the area member in the marginal region and optionally may provide a resistant surface for abutting against the frame structure. In particular, the reinforcing members may be formed as rigid, longitudinally extending profiles or stripe shaped members. The reinforcing members may in particular extend within the marginal region of the area member. Spacing of the reinforcing members improves the contractability of the area member. According to an exemplary embodiment, the reinforcing members may be arranged pair wise opposite to each other with respect to axes of symmetry of the first surface of the area member.

According to a further embodiment, the at least two reinforcing members are embedded within the multi-layered composite structure of the area member or are attached to the area member by means of a fastener. Hence, according to a first alternative, the reinforcing members are embedded within the cross-section of the area member, that is sandwiched between layers of the multi-layered composite structure. Thereby, a highly reliable fastening of the reinforcing members to the area member is achieved. Alternatively thereto, the reinforcing members may be attached to the area member by means of a fastener such as fastening devices, for example screws or such like, or adhesive bonding. In this manner, manufacturing of the area member is eased.

According to a further embodiment, the area member of the aircraft door further comprises at least one fibre layer of a fibre material, for example carbon fibres, glass fibres, aramid fibres or such like. In particular, the at least one fibre layer is included within the multi-layered composite structure of the area member. The at least one fibre layer improves mechanical strength of the area member.

According to a further embodiment, the area member of the aircraft door further comprises at least one rubber layer. The rubber layer comprises a rubber material and in particular may consist of a rubber material. The rubber material may in particular be natural or synthetic caoutchouc. In particular, the at least one rubber layer is included within the multi-layered composite structure of the area member. The at least one rubber layer improves elasticity of the area member and hence lowers the force which has to be applied by the actuator layers for contracting the area member.

According to a further embodiment, the area member of the aircraft door further comprises at least one battery layer as an emergency electrical power source for applying electrical voltage to the actuator layers. The battery layer comprises one or more electrochemical cells which are formed as a layer of areal expanse. In particular, the battery layer comprises electrodes being electrically coupled to the actuator layers. Providing a battery layer within the multi-layered composite structure provides the advantage that the area member may be contracted at least once even if an external source of power is not available or out of order, for example in case of an emergency.

According to a further embodiment, the area member of the aircraft door further comprises at least one functional layer comprising a printed electronic circuit. The functional layer may be coupled to or comprise the connection interface. Further, the functional layer may comprise logical circuits, for example for controlling application of electrical voltage to the actuator layers. By integrating such functionality within the multi-layered structure of the area member, a very compact and highly functional aircraft door is provided.

According to a further embodiment, the aircraft door further comprises an aerodynamic filler member comprising an areal expanse and being attached to the area member. The aerodynamic filler member is provided as plate or bowl shaped member which is attached to an outer surface of the area member. The aerodynamic filler member comprises a smaller areal expanse than the area member of the aircraft door. In particular, the shape of the areal expanse of the aerodynamic filler member may be adapted to the shape and size of an access opening of a fuselage of an aircraft. Further, a thickness of the aerodynamic filler member may be adapted such that a surface of the aerodynamic filler member facing away from the area member of the aircraft door lies flush with an outer, aerodynamic surface of the fuselage when the aircraft door is positioned in the closing position. Thereby, aerodynamic impact of the door system, when installed in an aircraft, is reduced.

The aerodynamic filler member may be formed in the same manner than the area member. In particular, the aerodynamic filler member may be formed as a multi-layered composite structure including multiple actuator layers as described above. Thereby, synchronous deformation of the area member and the aerodynamic filler member is achieved in an efficient manner. Alternatively, the aerodynamic filler member may be formed of an elastic material so that contraction of the area member is only slightly or minimally restrained by the aerodynamic filler member.

According to a further aspect of the invention, a method for opening and closing an aircraft door comprising an area member which in a closing position covers an aperture defined by a frame structure and in an opening position clears the aperture is provided. The method comprises applying an electrical voltage to actuator layers of the area member and thereby exciting an electroactive material of the actuator layers to an excited state in which the electroactive material is deformed which causes contraction of the area member such that an overlap between a marginal region of the area member and the frame structure is cleared. A further step of the method includes moving the area member through the aperture to the closing position or the opening position.

The method may in particular be applied to the aircraft door system as described above. Therefore, the aspects disclosed for the aircraft door system are also valid for the method and vice versa.

The method in particular comprises applying an electrical voltage to actuator layers of the area member comprising EAP material. The EAP material is thereby excited and therefore deforms. This causes contraction of the area member. That is, the areal expanse of the area member is reduced. In the next step, the aircraft door is moved through the aperture to the opening or closing position. While performing movement of the door through the aperture, voltage is continuously applied. In particular, in case that the aircraft door is moved to the closing position, the application of voltage may be stopped when the door has reached the closing position.

During movement of the door, the door may in particular be guided by the pivoting device which defines a course of movement of the door, for example a pivotal movement about a pivot axis, wherein the course of movement extends through the aperture defined by the frame structure.

According to one embodiment, the method further comprises capturing an actual degree of contraction of the area member. This may be performed by means of a contraction capturing device, for example in the form of a resistive wire strain, mechanically coupled to the area member. The degree of contraction of the area member is then compared with a predefined range of contraction and the electrical voltage is controlled such that the actual degree of contraction lies within the predefined range of contraction. Controlling of the voltage and comparing of the degree of contraction may be performed by means of a control device. The control device in particular may comprise a processor unit, such as a CPU, and a computer readable storage unit, for example a hard disk, a floppy disk, a flash memory or such like. The control device may be realized by the optional functional layer of the area member, for example. Controlling the degree of contraction of the area member helps to cause not more contraction than necessary to the area member. This avoids weakening of the material and thus increases life time of the aircraft door. Further, controlling the degree of contraction of the area member to a predefined range assures that the overlap between the frame structure and the marginal region is reliably cleared so that the door can be opened or closed without blocking within the aperture.

According to a further aspect of the invention a use of an area member as an aircraft door is provided, wherein the area member is formed as a multi-layered composite structure including multiple actuator layers each of which comprising an electroactive polymer material being excitable to an excited state by applying an electrical voltage, and an electrical connection interface which is configured for electrically connecting the actuator layers to an electrical power source.

The area member may in particular be formed as described above in connection with the aircraft door system and the method. Therefore, the aspects disclosed for the aircraft door system and the method are also valid for the use of the area member.

Use of an area member formed as a multi-layered composite structure including multiple actuator layers each of which comprising an EAP material provides the benefit that the area member is deformable or contractable. In particular, the area member may be shrunk by applying an electrical voltage. This allows realization of an aircraft door which can be arrested in its closing position by an areal overlap between the area member and an arresting or frame structure. The areal overlap can be cleared in an efficient and simple manner without need of any mechanical systems by simply applying electrical voltage to the EAP material of the actuator layers.

Within the scope of the invention, the term "EAP material" includes generally polymer materials that respond to external stimuli formed by an electrical field by changing shape or size. In particular, this includes electronic EAP materials, that is EAP materials which change shape by electric field or coulomb forces, as well as ionic EAP materials, that is EAP materials which change shape by mobility or diffusion of ions and their conjugated substances. Electronic EAP materials may in particular include dielectric EAP materials, for example ferroelectric polymers such as Poly(vinylidene fluoride-trifluoroethylene) and dielectric elastomers such as commercially available Dow Corning HS3 Silicone, Nusil CF 19-2186 Silicone, and 3M VHB 4910 acrylic, electrostrictive graft elastomers, electrostrictive paper, electro-viscoelastic elastomers, ferroelectric polymers Liquid crystal elastomers (LCE). Ionic EAP materials may in particular include ionic polymer gels (IPG), ionic polymer metal composite (IPMC), conducting polymers (CP), and carbon nanotubes (CNT).

With respect to directions and axes, in particular with respect to directions and axes concerning the extent of physical structures, within the scope of the present invention, an extent of an axis, a direction, or a structure "along" another axis, direction, or structure includes in particular that said axes, directions, or structures, in particular tangents which result at a particular site of the respective structures, enclose an angle which is smaller than 45 degrees, preferably smaller than 30 degrees and in particular preferable extend parallel to each other.

With respect to directions and axes, in particular with respect to directions and axes concerning the extent of physical structures, within the scope of the present invention, an extent of an axis, a direction, or a structure "crossways", "across", or "transversal" to another axis, direction, or structure includes in particular that said axes, directions, or structures, in particular tangents which result at a particular site of the respective structures, enclose an angle which is greater or equal than 45 degrees, preferably greater or equal than 60 degrees, and in particular preferable extend perpendicular to each other.

### BRIEF DESCIRPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
- Fig. 1: schematically illustrates an aircraft including an aircraft door system according to an embodiment of the invention.
- Fig. 2: schematically illustrates a plan view to an outer side of an aircraft door of an aircraft door system according to an embodiment of the invention.
- Fig. 3: schematically illustrates a sectional view of an aircraft door system according to an embodiment of the invention, wherein the aircraft door of the aircraft door system is shown in a closing position, and wherein the sectional view is taken along line A-A shown in Fig. 2.
- Fig. 4: schematically illustrates the aircraft door system of Fig 3, wherein the aircraft door shown during transition from the closing position to an opening position and in a contracted state.
- Fig. 5: schematically illustrates the aircraft door system of Fig 3, wherein the aircraft door shown in the opening position and still in the contracted state.
- Fig. 6: schematically illustrates a plan view to an outer side of an aircraft door of an aircraft door system according to a further embodiment of the invention.
- Fig.7: schematically illustrates an exploded view of an area member of an aircraft door of an aircraft door system according to a further embodiment of the invention.
- Fig.8: schematically illustrates a plan view of an actuator layer of an area member of an aircraft door of an aircraft door system according to a further embodiment of the invention, wherein the actuator layer is in an unexcited state.
- Fig.9: schematically illustrates a plan view of an actuator layer of Fig. 8, wherein the actuator layer is in an excited state.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

### DETAILED DESCRIPTION OF SOME EMBODIMENTS OF THE INVENTION

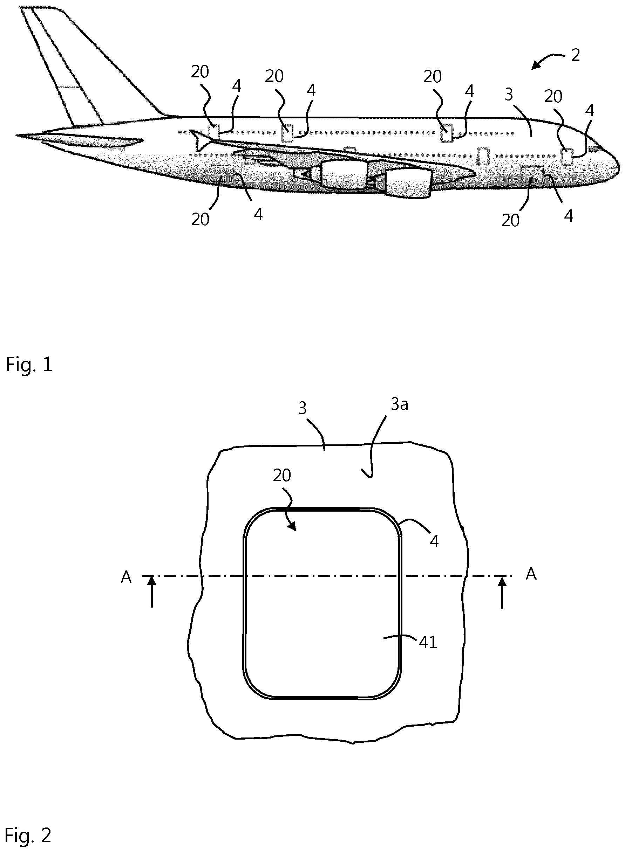

Fig. 1 exemplarily shows an aircraft 2 as a view to an exterior thereof. The aircraft 2 comprises a longitudinally extending fuselage 3. As is shown in Fig. 1, the fuselage 3 comprises a plurality of access openings 4 which are covered with aircraft doors 20. The access openings 4 are provided to allow freight to be loaded through the access openings 4 to an interior I of the aircraft 4, wherein the interior I is defined by the fuselage 3.

Fig. 2 schematically illustrates an enlarged view of one of the access openings 4 of the fuselage 3 viewed from the exterior of the aircraft 2, wherein the access opening 4 is covered by the aircraft door 20. As shown in Fig. 2, the aircraft door 20 comprises an areal expanse.

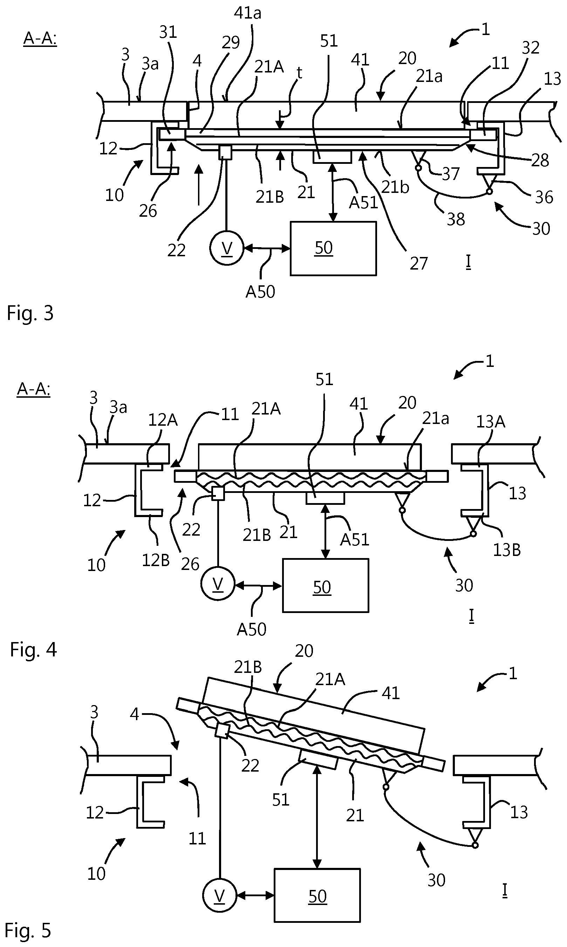

Fig. 3 schematically illustrates a sectional view of an aircraft door system 1. The aircraft door system 1 comprises a frame structure 10, the aircraft door 20, and a pivot device 30. Fig. 3 further shows an external electrical source of power V, forming part of the aircraft 2, an optional control device 50, and an optional contraction capturing device 51.

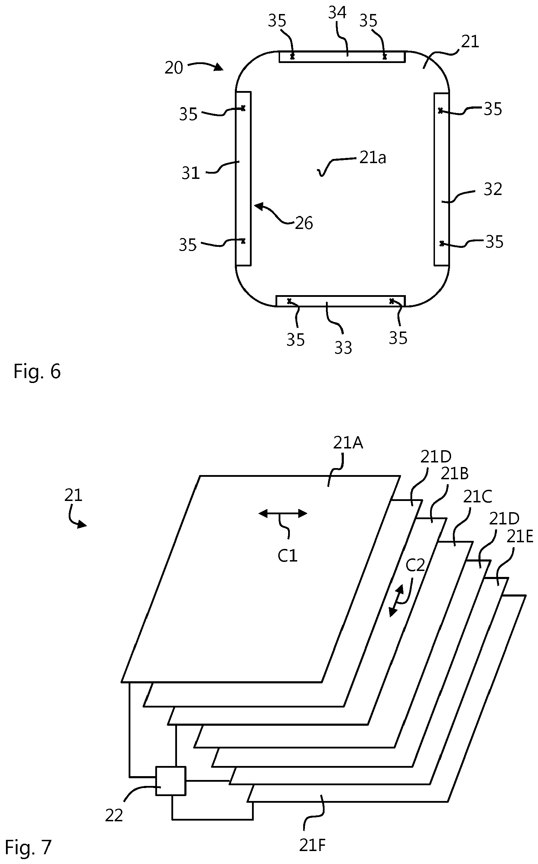

As shown in Fig. 3, the aircraft door 20 comprises an area member 21, an electrical connection interface 22, optional reinforcing members 31, 32, and an optional aerodynamic filler member 41. The area member 21 comprises an areal expanse and in particular may be plate shaped or bowl shaped with a first surface 21a and a second surface 21b oriented opposite to the first surface 21a. As exemplarily shown in Fig. 3, the area member may comprise a generally hat shaped cross-section with the first surface 21a being plane and the second surface 21b forming a plane marginal region 26 of the area member 21, a plane center region 27 and a tapered transition region 28 connecting the marginal region 26 to the center region 26. In the center region 28 a thickness t of the area member 21 is increased relative to the marginal region 26. The area member 21 of the aircraft door 20 is formed as a multi-layered composite structure including multiple actuator layers 21A, 21B. In Fig. 3 for sake of clarity only two actuator layers 21A, 21B are schematically illustrated by solid lines. The multi-layered composite structure in particular may include a matrix material 29 embedding the layers of the multi-layered composite structure. As becomes more clear from Fig. 6 and as will be described in more detail below, the area member 21 may comprise a plurality of layers, in particular the actuator layers 21A, 21B, stacked or positioned above one another.

Each of the actuator layers 21A, 21B comprises an electroactive polymer, EAP, material which is excitable to an excited state by an electrical voltage. For connecting for electrically connecting the actuator layers 21A, 21B to the external electrical power source V the electrical connection interface 22 is provided, as schematically illustrated in Fig. 3, for example. As will be described in further detail below, the actuator layers 21A, 21B in the exited state of the EAP material are contracted to an areal expanse being smaller than an areal expanse of the actuator layers 21A, 21B in an unexcited state of the EAP material, when no voltage is applied.

As shown further in Fig. 3, the aircraft door 20 optionally comprises at least the two reinforcing members 31, 32. As shown in Fig. 6, further reinforcing members 33, 34 may be provided. As is shown in particular in Fig. 6, the reinforcing members 31, 32, 33, 34 extend along the marginal region 26 of the area member 10. As is exemplarily shown in Fig. 3 and in Fig. 6, the reinforcing members 31, 32, 33, 34 may in particular extend within the marginal region 26. The reinforcing members 31, 32, 33, 34 are realized as longitudinal members or profiles which comprise a longitudinal extension corresponding to a respective section of an edge of the area member 21. As is shown in particular in Fig. 6, the reinforcing members 31, 32, 33, 34 are arranged spaced to each other along the extension of the marginal region 26. Fig. 6 exemplarily shows a rectangular shaped area member 21 comprising curved corner regions. The reinforcing members 31, 32, 33, 34 end at the curved regions, respectively, and hence are spaced apart from each other along the marginal region 26. The reinforcing members 31, 32, 33, 34 may be embedded within the multi-layered composite structure of the area member 21, as is exemplarily and schematically illustrated in Fig. 3. Alternatively, Fig. 6 shows exemplarily and schematically that the reinforcing members 31, 32, 33, 34 may be attached to the area member 21 by means of a fastener 35. For example, the reinforcing members 31, 32, 33, 34 may be fastened to the first surface 21a by means of fasteners 35, which may for example be realized as screws, rivets or such like.

As is shown further in Fig. 3, the optional aerodynamic filler member 41 may be attached to the first surface 21a of the area member 21. The aerodynamic filler member 41 is provided as plate or bowl shaped member, as is shown for example in Fig. 2. As shown in Fig. 3, the aerodynamic filler member 41 comprises a smaller areal expanse than the area member 21 of the aircraft door 20. In particular, the shape of the areal expanse of the aerodynamic filler member 41 may be adapted to the shape and size of the access opening 4, as is shown in Figs. 2 and 3. Further, as is shown in Fig. 3, a thickness of the aerodynamic filler 41 member may be adapted such that an outer surface 41a of the aerodynamic filler member 41 facing away from the area member 21 lies flush with an outer surface 3a of the fuselage 3 when the aircraft door 20 is positioned in the closing position.

Fig. 3 further shows an exemplary configuration of the frame structure 10. The frame structure 10 forms a closed frame defining an aperture 11. In a state in which the aircraft door system 1 is installed on the fuselage 3, the aperture surrounds or encircles the access opening 4. In particular, the frame structure may comprise longitudinally extending lateral frame members 12, 13. The lateral frame members 12, 13 are arranged so as to extend along each other and are spaced apart from each other by a distance equal to or slightly greater than a diameter of the access opening 4. The lateral frame members 12, 13 may be coupled to each other by upper and lower frame members (not shown) extending transversal to the lateral frame members 12, 13. The lateral frame members 12, 13 and the upper and lower frame members may in particular comprise a U-shaped cross-section as is exemplarily shown in Fig. 3.

Fig. 3 shows a closing position of the aircraft door 20. In the closing position, the area member 21 of the aircraft door 20 covers the aperture 11 defined by the frame structure 10 and the marginal region 26 of the area member 21 overlaps with the frame structure 10. In particular, the marginal region 26 is received within a space extending between opposite lugs 12A, 12B, 13A, 13B of the respective U-shaped frame members 12, 13

The pivoting device 30 is only schematically illustrated in Fig. 3. The pivoting device 30 is coupled to the frame structure 10 and to the aircraft door 20 and defines a course of movement of the aircraft door 20. For example, the pivoting device 30 may comprise a first hinge joint 36 fixed to one of the lateral frame members 12, 13 and a second hinge joint 37 fixed to the aircraft door 20, in particular to the area member 21. A lever arm 38 may be mounted in the first and second hinge joints 36, 37. Thereby, the aircraft door 20 may be pivoted about the first and the second hinge joints 36, 37 and guided by the lever arm 38. Generally, the pivoting device 30 allows guiding the aircraft door 20 between the closing position and an opening position in which the aircraft door 1 clears the aperture 11, as is exemplarily shown in Fig. 5.

As schematically illustrated in Fig. 3 by means of arrow A50, the control device 50 may be functionally coupled to the electrical source of power V so as to control the amount of the electrical voltage supplied to the actuator layers 21A, 21B. As shown further in Fig. 3, the contraction capturing device 51, which may for example be realized as a resistance strain gauge, may be attached to the second surface 21b of the area member 21 and is configured to capture a deformation or contraction of the area member 21. The contraction capturing device 51 is functionally coupled to the capturing device 51 as is schematically illustrated in Fig. 3 by means of arrow A51. Functional coupling of two components herein is to be understood as being configured to allow electromagnetic signal transfer between the respective components. Functional coupling in particular can be realized by means of wiring or wireless data transfer devices such as transmitter-receiver-units. The control device 50 in particular may be configured to control the voltage depending on the degree of contraction captured by the contraction capturing device 51.

In Fig. 3, the actuator layers 21A, 21B are shown in an unexcited state, that is with no voltage applied to the EAP material of the actuator layers 21A, 21B

The actuator layers 21A, 21B in the excited state of the electroactive polymer material are deformed such that the area member 10 is contracted to an areal expanse in which the overlap between the frame structure 10 and the marginal region of the area member 10 is cleared. This is schematically illustrated in Fig. 4. For moving the aircraft door 20 from the closing state shown in Fig. 3 to the opening state shown in Fig. 5, an electrical voltage to actuator layers 21A, 21B of the area member is applied, for example by means of electrical power source V which may be activated or interconnected by the control device 50. Thereby the EAP material of the actuator layers 21A, 21B is excited to the excited state in which the electroactive material is deformed. This is schematically illustrated in Fig. 4 by showing the actuator layers 21A, 21B as periodically curved lines. The deformation of the EAP material causes contraction of the area member 21 such that the overlap between the marginal region 26 of the area member 21 and the frame structure 10 is cleared, as is shown in Fig. 4. The aircraft door 20 then can be moved under guidance of the pivoting device 30 through the aperture 11 to the opening position, as is shown in Fig. 5.

During application of the voltage, an actual degree of contraction of the area member 21 may be captured by means of the contraction capturing device 51. The captured, actual degree of contraction is transferred to the control device 50 which performs comparing of the captured degree of contraction with a predefined range of contraction and controls the electrical voltage such that the actual degree of contraction lies within the predefined range of contraction.

Fig. 7 exemplarily and schematically shows a sequence of layers of the area member 21 as an exploded view. The area member 21 additionally to the actuator layers 21A, 21B may optionally comprise at least one fibre layer 21C of a fibre material, at least one rubber layer 21D, at least one battery layer 21E as an emergency electrical power source for applying electrical voltage to the actuator layers 21A, 21B, and at least one functional layer 21F comprising a printed electronic circuit (not shown). As shown exemplarily in Fig. 7, the rubber layer 21D may be sandwiched between the actuator layers 21A, 21B. From the bottom to the top, Fig. 7 shows by way of example the following sequence of layers: functional layer 21F, battery layer 21E, rubber layer, 21D, fibre layer 21C, actuator layer 21B, rubber layer 21D, actuator layer 21A. The layers, 21A-F are stacked above each other and may be embedded in a matrix material (not shown in Fig. 7).

As is schematically shown further in Fig. 7, the electrical connection interface 22 is electrically connected to the actuator layers 21A, 21B and further may be connected to the optional functional layer 21F and the optional battery layer 21E. The electrical connection may be realized by pins extending through the respective layers and electrically connecting the respective layers to each other. It is also possible to only connect the electrical connection interface 22 to the optional functional layer 21F and provide one or more contact pins extending from the functional layer to the respective actuator layers 21A, 21B.

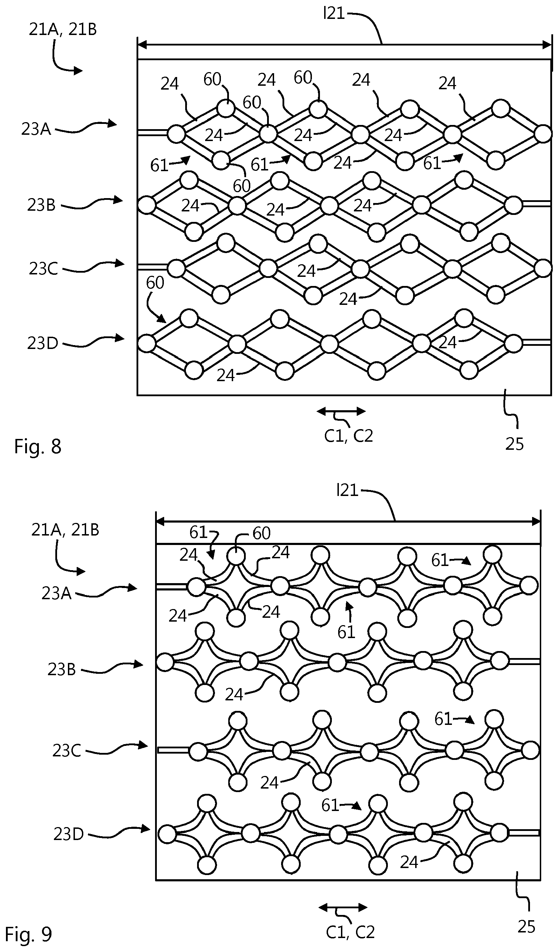

The actuator layers 21A, 21B in the exited state are contracted with respect to a contracting direction C1, C2 relative to the unexcited state. That is, a length I21 of each of the actuator layers 21A, 21B measured in the contracting direction C1, C2 in the excited state is shortened relative to the unexcited state, as is shown schematically in Figs. 8 and 9 which will be described in more detail below. As is shown in Fig. 7, the area member 21 may include one or more first actuator layers 21A and one or more second actuator layers 21B. The one or more first actuator layers 21A and the one or more second actuator layers 21B may be arranged within the multi-layered composite structure such that the contracting direction C1 of the one or more first actuator layers 21A extends transversal to the contracting direction C2 of the one or more second actuator layers 21B.

Figs. 8 and 9 exemplarily show a detail view of the actuator layers 21A, 21B. As is shown in Figs. 8 and 9, the actuator layers 21A, 21B may comprise a plurality of strings 23A, 23B, 23C, 23D and an optional carrier film 25.

The carrier film 25 comprises an areal expanse and in particular may define the areal expanse of the actuator layer 21A, 21B. The strings 23A, 23B, 23C, 23D may be attached to the carrier film 25, for example by means of an bonding agent or in a similar manner.

Each of the strings 23A, 23B, 23C, 23D is formed by a plurality of electroactive polymer sticks 24. For example, the sticks 24 may be realized as IPMC films. As shown in Figs. 8 and 9, each of the strings 23A, 23B, 23C, 23D extends longitudinally. Further, the strings 23A, 23B, 23C, 23D extend along each other and are spaced apart each other transversal to their longitudinal expanse. Figs. 8 and 9 symbolically show four strings 23A, 23B, 23C, 23D. It has to be noted that the strings 23A, 23B, 23C, 23D and its components are shown in scaled up fashion for the sake of clarity in Figs. 8 and 9.

The sticks 24 within the respective strings 23A, 23B, 23C, 23D are coupled to one another. This may in particular be realized by coupling pieces 60, wherein one coupling piece 60 couples the ends of at least two sticks 24, respectively. In Figs. 8 and 9 the coupling pieces 60 are shown in a mere symbolic manner as circles. The coupling pieces 60 may be realized as stripe shaped components of a flexible material which are bonded to the ends of the sticks 24, respectively.

Figs. 8 and 9 show an exemplary arrangement of the sticks 24 within the respective strings 23A, 23B, 23C, 23D. As is shown in Figs. 8 and 9, the strings 23A, 23B, 23C, 23D are formed by a plurality of rhombus shaped string members 61. Each of the string members 61 is formed by four sticks 24 which are coupled together such that they define a rhombus shaped pitch between each other. As exemplarily shown in Figs. 8 and 9, adjacent strings 23A, 23B, 23C, 23D may be arranged such that centers of the pitches of the string members 61 of the adjacent strings 23A, 23B, 23C, 23D are offset to one another along the longitudinal expanse of the strings 23A, 23B, 23C, 23D. Thereby, a high number of strings 23A, 23B, 23C, 23D per area may be realized which results in high actuation forces. A length of the string members 61 measured along the longitudinal expanse of the respective string 23A, 23B, 23C, 23D may in particular lie within the range of 5 mm to 80 mm.

Fig. 8 shows the actuator layer 21A, 21B in an unexcited state of electroactive polymer material of the sticks 24. In this state, the sticks 24 extend substantially straight. Fig. 9 shows the actuator layer 21A, 21B in an excited state of electroactive polymer material of the sticks 24. In the exited state of the electroactive polymer material are bent to a curved shape. Generally, in the excited state, a radius curvature of the sticks 24 is decreased relative to their radius of curvature in the unexcited state. Due to the decreased radius curvature of the sticks 24, a shortest possible distance between opposite ends of each of the sticks 24 is decreased. This results in decrease of the longitudinal expanse of the strings 23A, 23B, 23C, 23D and thus in a decrease of the length I21 of the actuator layers 21A, 21B in the contracting direction C1, C2, as becomes apparent from a comparison of Figs. 8 and 9. Thereby, the longitudinal expanse of the strings 23A, 23B, 23C, 23D defines the contracting direction C1, C2.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

### LIST OF REFERENCE SIGNS

- 1: aircraft door system
- 2: aircraft
- 3: fuselage
- 3a: outer surface of the fuselage
- 4: access opening
- 10: frame structure
- 11: aperture
- 12, 13: frame members
- 12A; 12B: lugs
- 13A; 13B: lugs
- 20: aircraft door
- 21: area member
- 21a: first surface of the area member
- 21b: second surface of the area member
- 21A: first actuator layers
- 21B: second actuator layers
- 21C: fibre layer
- 21D: rubber layer
- 21E: battery layer
- 21F: functional layer
- 22: electrical connection interface
- 23A: string
- 23B: string
- 23C: string
- 23D: string
- 24: electroactive polymer sticks
- 25: carrier film
- 26: marginal region of the area member
- 27: center region
- 28: transition region
- 29: matrix material
- 30: pivoting device
- 31: reinforcing member
- 32: reinforcing member
- 33: reinforcing member
- 34: reinforcing member
- 35: fastener
- 36: first hinge joint
- 37: second hinge joint
- 38: lever arm
- 41: aerodynamic filler member
- 41a: outer surface of the aerodynamic filler member
- 50: control device
- 51: contraction capturing device
- 60: coupling piece
- 61: string member
- A50: arrow
- A51: arrow
- C1: contracting direction of the first actuator layers
- C2: contracting direction of the second actuator layers
- I21: length
- t: thickness of the area member
- V: electrical power source

## Claims

1. Aircraft door system (1), comprising:
a frame structure (10) defining an aperture (11) which is provided for surrounding an access opening (4) of a fuselage (3) of an aircraft (2);
an aircraft door (20) comprising an area member (21) being formed as a multi-layered composite structure including multiple actuator layers (21A; 21B) each of which comprising an electroactive polymer material being excitable to an excited state by an electrical voltage, and an electrical connection interface (22) which is configured for electrically connecting the actuator layers (21A; 21B) to an electrical power source (V); and
a pivoting device (30) being coupled to the frame structure (10) and the aircraft door (20) for guiding the aircraft door (20) between a closing position, in which the area member (21) of the aircraft door (20) covers the aperture (11) and a marginal region (26) of the area member (21) overlaps with the frame structure (10), and an opening position in which the aircraft door (1) clears the aperture (11);
wherein the actuator layers (21A; 21B) in the excited state of the electroactive polymer material are deformed such that the area member (10) is contracted to an areal expanse in which the overlap between the frame structure (10) and the marginal region of the area member (10) is cleared.

2. Aircraft door system (1) according to claim 1, wherein the actuator layers (21A; 21B) include one or more first actuator layers (21A) and one or more second actuator layers (21B), wherein in the excited state the first and second actuator layers (21A; 21B) each are contracted with respect to a contracting direction (C1; C2) relative to an unexcited state of the first and second actuator layers (21A; 21B), and wherein the one or more first actuator layers (21A) and the one or more second actuator layers (21B) are arranged within the multi-layered composite structure such that the contracting direction (C1) of the one or more first actuator layers (21A) extends transversal to the contracting direction (C2) of the one or more second actuator layers (21B).

3. Aircraft door system (1) according to claim 1 or 2, wherein the actuator layers (21A; 21B) each comprise a plurality of strings (23A; 23B; 23C; 23D) each of which being formed by a plurality of electroactive polymer sticks (24) which are coupled to one another, wherein the strings (23A; 23B; 23C; 23D) extend along each other, and wherein the sticks (24) in the exited state of the electroactive polymer material are bent to a curved shape.

4. Aircraft door system (1) according to claim 3, wherein the sticks (24) are coupled to one another within the respective string (23A; 23B; 23C; 23D) such that four sticks (24) together form a rhombus shaped string member (61), respectively.

5. Aircraft door system (1) according to claim 3 or 4, wherein each of the actuator layers (21A; 21B) comprises a carrier film (25) to which the plurality of strings (23A; 23B; 23C; 23D) is attached.

6. Aircraft door system (1) according to one of the preceding claims, wherein the aircraft door (20) comprises at least two reinforcing members (31; 32; 33; 34) extending along the marginal region (26) of the area member (10) and being arranged spaced to each other along the extension of the marginal region (26).

7. Aircraft door (1) according to claim 6, wherein the at least two reinforcing members (31; 32; 33; 34) are embedded within the multi-layered composite structure of the area member (21) or are attached to the area member (21) by means of a fastener (35).

8. Aircraft door system (1) according to one of the preceding claims, wherein the area member (21) of the aircraft door (20) further comprises one or more of the following:
at least one fibre layer (21C) of a fibre material;
at least one rubber layer (21D);
at least one battery layer (21E) as an emergency electrical power source for applying electrical voltage to the actuator layers (21A; 21B);
at least one functional layer (21F) comprising a printed electronic circuit.

9. Aircraft door system (1) according to one of the preceding claims, wherein the aircraft door (1) further comprises an aerodynamic filler member (41) comprising an areal expanse and being attached to the area member (21).

10. Method for opening and closing an aircraft door (20) comprising an area member (21) which in a closing position covers an aperture (11) defined by a frame structure (10) and in an opening position clears the aperture (11), the method comprising:
applying an electrical voltage to actuator layers (21A; 21B) of the area member (21) and thereby exciting an electroactive material of the actuator layers (21A; 21B) to an excited state in which the electroactive material is deformed which causes contraction of the area member (21) such that an overlap between a marginal region (26) of the area member (21) and the frame structure (10) is cleared; and
moving the area member (21) through the aperture (11) to the closing position or the opening position.

11. Method according to claim 10, further comprising:
capturing an actual degree of contraction of the area member (21);
comparing the degree of contraction with a predefined range of contraction; and
controlling the electrical voltage such that the actual degree of contraction lies within the predefined range of contraction.

12. Use of an area member (10) being formed as a multi-layered composite structure including multiple actuator layers (21A; 21B) each of which comprising an electroactive polymer material being excitable to an excited state by applying an electrical voltage, and an electrical connection interface which is configured for electrically connecting the actuator layers (11A, 11B) to an electrical power source (V) as an aircraft door (1).
